# EUROPÄISCHE PATENTSCHRIFT

(11) **EP 3 991 899 B1**
(45) Veröffentlichungstag und Bekanntmachung des Hinweises auf die Patenterteilung: **28.05.2025**
(21) Anmeldenummer: 21200957.5
(22) Anmeldetag: 05.10.2021
(51) Int. Cl.: B23D 61/02

(54) **SUPERLEGIERUNGSSÄGEBLATT**
SUPER ALLOY SAW BLADE
LAME DE SCIE EN SUPER ALLIAGE

(30) Priorität: 03.11.2020 DE 102020128920
(43) Veröffentlichungstag der Anmeldung: 04.05.2022
(73) Patentinhaber: WIKUS-Sägenfabrik Wilhelm H. Kullmann GmbH & Co. KG, 34286 Spangenberg (DE)
(72) Erfinder: Kullmann, Jörg H., 34286 Spangenberg (DE)
(74) Vertreter: REHBERG HÜPPE + PARTNER

(56) Entgegenhaltungen:
- CN-A- 109 530 806
- DE-A1- 1 652 756
- US-A1- 2009 217 537
- US-A1- 2012 052 315
- US-A1- 2014 212 318
- US-A1- 2014 345 434
- US-A1- 2016 001 383

## Beschreibung

### TECHNISCHES GEBIET DER ERFINDUNG

Die Erfindung betrifft das technische Gebiet der Stahlherstellung und insbesondere des Trennens von Rohwerkstücken aus Stahl mit hohen Temperaturen von mindestens 750 °C.

Derart hohe Temperaturen liegen nach der Herstellung und Wärmebehandlung von Rohwerkstücken aus Stahl vor. Diese Rohwerkstücke sollen dann insbesondere getrennt und weiterverarbeitet werden.

### STAND DER TECHNIK

Im Stand der Technik ist es allgemein bekannt, das Trennen von Rohwerkstücken aus Stahl mit einer Temperatur von mindestens 750 °C mit einer Sauerstofflanze durchzuführen. Dabei entstehen hohe Emissionen, die auch eine Absaugung erforderlich machen. Die Anwendung einer Sauerstofflanze ist für den Bediener trotz der zwingend erforderlichen Schutzkleidung gefährlich und ungesund.

Es ist im Stand der Technik weiterhin allgemein bekannt, ein derartiges Trennverfahren mit einer Trennscheibe durchzuführen. Der Durchmesser der Trennscheibe muss sehr groß gewählt werden, wenn damit Werkstücke unterschiedlicher Durchmesser getrennt werden sollen. Alternativ müssen verschiedene Trennscheiben mit unterschiedlichen Durchmessern für verschiedene Werkstücke mit unterschiedlichen Durchmessern verwendet werden. Hierdurch entsteht Zusatzaufwand beim Wechseln der Trennscheibe. Eine Trennscheibe weist einen hohen Verschleiß auf und muss bei derart beanspruchenden Anwendungen häufig ersetzt werden.

Ein Kreissägeblatt mit einem Zahntragekörper und einer Mehrzahl von an dem Zahntragekörper angeordneten Zähnen ist aus der deutschen Patentanmeldung DE 16 52 756 A bekannt. Das Kreissägeblatt dient zum Trennen walzwarmer Stähle mit einer Temperatur in einer Größenordnung von etwa 700 bis 1.000 °C. Hierfür weisen die Zähne und die Zahnlücken eine besondere Geometrie auf.

Ein Kreissägeblatt mit einem Zahntragekörper und einer Mehrzahl von an dem Zahntragekörper angeordneten Zähnen ist aus der chinesischen Patentanmeldung CN 109 530 806 A bekannt. Die Zähne weisen Schneideinsätze auf, die aus einer Superlegierung bestehen.

Die Druckschrift US 2012 / 0 052 315 A1 schlägt vor, im Automobilbereich, in der Luft- und Raumfahrt, in der Landwirtschaft, im medizinischen oder dentalen Bereich, bei ballistischen Produkten, bei Haushaltswaren, insbesondere Messern, Rasierklingen, Scheren, Sicheln, Äxten, Sägeblättern, Drehwerkzeugen oder Meißel, Zähne oder Schneidkanten im Bereich der Oberfläche zur Erhöhung der Verschleißfestigkeit mit Bor zu dotieren.

US 2014 / 0 212 318 A1 offenbart eine Herstellung eines Kreissägeblatts aus Hartmetall, Keramik oder Stahl, wobei das Kreissägeblatt in einem Sinterprozess hergestellt sein soll.

Weiterer Stand der Technik ist aus US 2014 / 0 345 434 A1, US 2016/001383 A1 oder US 2009/217537 A1 bekannt.

### AUFGABE DER ERFINDUNG

Der Erfindung liegt die Aufgabe zugrunde, ein Trennwerkzeug bereitzustellen, mit dem Werkstücke aus Stahl, die eine hohe Temperatur besitzen, sicher, effizient und umweltfreundlich getrennt werden können.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

Die Erfindung betrifft ein Trennwerkzeug mit einem Zahntragekörper und einer Mehrzahl von an dem Zahntragekörper angeordneten Zähnen. Der Zahntragekörper besteht aus einer Superlegierung.

Die Erfindung betrifft weiterhin einen Zahntragekörper für ein Trennwerkzeug, das den Zahntragekörper und eine Mehrzahl von an dem Zahntragekörper angeordnete Zähne aufweist, wobei der Zahntragekörper aus einer Superlegierung besteht.

Die Erfindung betrifft auch die Verwendung eines Trennwerkzeugs, Zerteilungswerkzeugs oder Zerspanungswerkzeugs mit einem Zahntragekörper aus einer Superlegierung und einer Mehrzahl von an dem Zahntragekörper angeordneten Zähnen als Hochtemperaturstahltrennwerkzeug zum Trennen eines Rohwerkstücks aus Stahl mit einer Temperatur von mindestens 750 °C.

Die Erfindung betrifft weiterhin die Verwendung eines Zerspanungswerkzeugs mit einem Zahntragekörper aus einer Superlegierung und einer Mehrzahl von an dem Zahntragekörper angeordneten Zähnen als Werkstück-Unterwassertrennwerkzeug zum Trennen eines Werkstücks unter Wasser oder als Werkzeug zum Trennen eines Werkstücks mit reinem Wasser als Kühlschmierstoff.

### Definitionen

**Trennwerkzeug:** Unter einem Trennwerkzeug wird in dieser Anmeldung in Übereinstimmung mit DIN 8588 ein Werkzeug verstanden, mit dem das Fertigungsverfahren des Trennens durchgeführt wird. Gemäß dieser Norm gehören zum Trennen u. a. das Zerteilen, das Spanen mit geometrisch bestimmten Schneiden und das Spanen mit geometrisch unbestimmten Schneiden.

**Zerteilen:** Unter dem Zerteilen wird in dieser Anmeldung in Übereinstimmung mit DIN 8588 das mechanische Trennen von Werkstücken ohne das Entstehen von Spänen verstanden.

**Zerspanen:** Unter dem Zerspanen oder Spanen wird in dieser Anmeldung in Übereinstimmung mit DIN 8588 das mechanische Trennen von Werkstücken mit dem Entstehen von Spänen verstanden.

**Zerspanungswerkzeug:** Beim Zerspanen oder Spanen wird zwischen dem Spanen mit geometrisch bestimmten Schneiden und dem Spanen mit geometrisch unbestimmten Schneiden unterschieden. Zum Spanen mit geometrisch bestimmten Schneiden gehört auch das Sägen gemäß DIN 8589-6. Das Sägen gehört normgemäß aber nicht zum Spanen mit geometrisch unbestimmten Schneiden. Aus diesem Grund wird in dieser Anmeldung der zutreffende verallgemeinerte Begriff des Trennwerkzeugs oder des Zerspanungswerkzeugs verwendet. In der Praxis werden Zerspanungswerkzeuge aus diesem technischen Gebiet mit Schneidpartikeln aber nichtsdestotrotz zumeist als Sägebänder bzw. Sägeblätter bezeichnet.

**Sägeblatt:** Unter einem Sägeblatt wird in dieser Anmeldung ein langgestrecktes Sägeband, ein Bügelsägeblatt, Kreissägeblatt, Maschinensägeblatt, Säbelsägeblatt, Stichsägeblatt oder eine andere mögliche Bauform eines Sägeblatts verstanden.

**Zahntragekörper:** Unter einem Zahntragekörper wird in dieser Anmeldung der Teil des Trennwerkzeugs verstanden, an dem die Zähne des Trennwerkzeugs angeordnet sind. Oftmals wird in diesem Zusammenhang auch von dem "Grundkörper" des Trennwerkzeugs gesprochen. Der Begriff "Zahntragekörper" soll jedoch besser zum Ausdruck bringen, dass es sich um den Teil des Trennwerkzeugs handelt, der selbst nicht als Zahn bezeichnet werden kann, an dem aber die Zähne angeordnet sind. Dabei ist zu beachten, dass hier Unterschiede zwischen der funktionsmäßigen und der materialmäßigen Unterscheidung zwischen Zahntragekörper und Zähnen bestehen. Funktionsmäßig beginnt der Zahn mit seiner Zahnbasis im Bereich des Zahngrunds. Diese Zahnbasis besteht jedoch oftmals aus demselben Werkstoff wie der Zahntragekörper und ist einstückig mit diesem ausgebildet. Anders gesagt erfüllt ein Teil dieses Werkstoffs die Funktion des Zahntragekörpers und ein anderer Teil die Funktion der Zahnbasis und somit des Zahns. Die materialmäßige Trennung liegt dann erst weiter abgewandt vom Zahntragekörper im Bereich der Zahnspitze vor.

**Superlegierung:** Unter einer Superlegierung wird in dieser Anmeldung in Übereinstimmung mit der anerkannten Fachdefinition ein metallischer Werkstoff mit einer komplexen Zusammensetzung (Eisen, Nickel, Platin, Chrom oder Cobalt-Basis mit Zusätzen der Elemente Co, Ni, Fe, Cr, Mo, W, Re, Ru, Ta, Nb, Al, Ti, Mn, Zr, C und/oder B) für Hochtemperaturanwendungen verstanden. Eine Superlegierung weist eine hohe Warmfestigkeit und eine hohe Kriechbeständigkeit auf. Ein Beispiel ist eine Nickelbasis-Superlegierung.

**Wärmedämmschicht:** Unter einer Wärmedämmschicht wird in dieser Anmeldung eine auf einen Werkstoff aufgebrachte Beschichtung verstanden, die bei Hochtemperaturanwendungen des Werkstoffs aufgrund ihrer geringen Wärmeleitfähigkeit verhindert, dass die Werkstofftemperatur zu stark steigt. Beispiele sind Zirkondioxid und Gadoliniumzirkonat.

**Hartstoffschicht:** Unter einer Hartstoffschicht wird in dieser Anmeldung eine auf einen Werkstoff aufgebrachte Beschichtung verstanden, die aus einem Hartstoff besteht. Die Härte der Hartstoffschicht liegt bei mindestens 2.000 HV 1. Die Hartstoffschicht besitzt weiterhin eine hohe Warmfestigkeit. Beispiele sind AlCrN und Nanokompositeschichten.

### Weitere Beschreibung

Es wird eine ganz neue Art eines Trennwerkzeugs zum Trennen von heißen Werkstücken aus Stahl eingesetzt. Dies betrifft insbesondere das Trennen von Rohwerkstücke aus Stahl während der Stahlherstellung.

Obwohl die Rohwerkstücke sehr hohe Temperaturen von mindestens 750 °C besitzen, erfolgt das Trennen mittels eines Trennwerkzeugs, Zerteilungswerkzeugs bzw. Zerspanungswerkzeugs. Im Stand der Technik wurde es bisher aufgrund der hohen Temperaturen als unmöglich angesehen, dieses Verfahren mit einem Zerspanungswerkzeug auszuführen. Dieses Vorurteil wird nun erstmals dadurch überwunden, dass der Zahntragekörper aus einer Superlegierung besteht.

Die Superlegierung weist eine hinreichend große Warmfestigkeit und Kriechbeständigkeit auf und ist dadurch für eine derartige Hochtemperaturanwendung geeignet. Die Superlegierung kennzeichnet sich auch dadurch, dass sie bei etwa 90 % ihrer Schmelztemperatur noch strukturell belastbar (hochwarmfest) ist. Das neue Werkzeug kann somit auch als Superlegierungstrennwerkzeug bezeichnet werden.

Zusätzlich kann der Zahntragekörper mit einer Wärmedämmschicht beschichtet sein. Auch hierdurch wird erreicht, dass das Trennwerkzeug bei dem in Rede stehenden Hochtemperatureinsatz die erforderliche strukturelle Belastbarkeit besitzt.

Zusätzlich kann der Zahntragekörper mit einer Hartstoffschicht beschichtet sein. Auch hierdurch wird erreicht, dass das Trennwerkzeug bei dem in Rede stehenden Hochtemperatureinsatz die erforderliche strukturelle Belastbarkeit besitzt.

Neben dem Zahntragekörper können auch die Zähne ganz oder teilweise aus der Superlegierung bestehen und/oder mit der Wärmedämmschicht und/oder der Hartstoffschicht beschichtet sein. Die Zahnspitzen und/oder die Schneiden bestehen aber insbesondere aus einem anderen Material bzw. sind nicht mit einer Wärmedämmschicht beschichtet. Sie können aber mit der Hartstoffschicht beschichtet sein.

Bei den hohen herrschenden Temperaturen erfolgt das Trennen anders, als dies bei den normalerweise bei einer Zerspanung herrschenden wesentlich geringeren Temperaturen der Fall ist. Es werden weniger oder gar keine Späne gebildet. Mindestens ein Teil des Trennprozesses erfolgt eher im Sinne eines Ausschiebens des teilweise fließfähigen Materials des Rohwerkstücks aus Stahl. Daher wird in dieser Anmeldung von einem Trennwerkzeug gesprochen. Dies ändert aber nichts daran, dass es sich bei dem Werkzeug um ein solches mit den definitionsgemäßen gegenständlichen Merkmalen eines Zerspanungswerkzeugs handelt.

Das neue Trennwerkzeug macht es möglich, Stahl mit hohen Temperaturen direkt nach seiner Herstellung und Wärmebehandlung weiterzuverarbeiten, ohne diesen vorher auf Raumtemperatur abkühlen (lassen) zu müssen. Die Rohwerkstücke benötigen also keinen aufwändigen Abkühlprozess für das Trennen und müssen somit anschließend zur weiteren Verarbeitung auch nicht wieder auf die Verarbeitungstemperatur erwärmt werden. Dadurch ergibt sich eine Einsparung von Zeit, Energie und Kosten. Zudem können Analyseschnitte der Rohwerkstücke für anschließende Untersuchungen und Analysen früher durchgeführt werden.

Bei dem Trennwerkzeug handelt es sich insbesondere um ein Sägewerkzeug, insbesondere ein Sägeband oder ein Kreissägeblatt. Wenn das Trennwerkzeug Zähne mit geometrisch unbestimmten Schneiden aufweist, handelt es sich normgemäß um kein Sägewerkzeug oder Sägeblatt, sondern ein anderes Zerspanungswerkzeug. Wenn man aber aufgrund der hohen Temperaturen beim Einsatz des Trennwerkzeugs davon ausgeht, dass keine Späne entstehen, wird ein solches Werkzeug normgemäß als Zerteilungswerkzeug bezeichnet. An der Geometrie ändert sich dadurch aber nichts.

Das Trennwerkzeug dient insbesondere nicht zum Durchführen eines der anderen Verfahren des Zerspanens mit geometrisch bestimmten Schneiden gemäß DIN 8589. Dies gilt insbesondere für das Drehen, Bohren und Fräsen.

Die Superlegierung ermöglicht den Einsatz des Trennwerkzeugs bei Temperaturen von mindestens etwa 750 °C, insbesondere mindestens etwa 800 °C, insbesondere mindestens etwa 900 °C, insbesondere mindestens etwa 1.000 °C, insbesondere zwischen etwa 800 °C und 1.400 °C, insbesondere zwischen etwa 900 °C und 1.300 °C, insbesondere zwischen etwa 1.000 °C und 1.300 °C. Die dabei vorliegende Festigkeit und Kriechbeständigkeit der Superlegierung ist ausreichend, um das Trennverfahren ohne wesentliche Beschädigungen des Werkzeugs durchzuführen.

Die Superlegierung ist zudem besonders korrosionsbeständig.

Bei der Superlegierung kann es sich um eine Nickelbasis-Superlegierung handeln. Bei einer Nickelbasis-Superlegierung ist der Hauptlegierungsbestandteil Nickel. Es ist mindestens ein anderes chemisches Element als Legierungselement vorhanden. Eine solche Nickelbasis-Superlegierung weist die erforderlichen Eigenschaften auf, um den gewünschten Einsatzzweck zu erfüllen. Die Schmelztemperatur liegt bei etwa 1.300 °C. Die Warmfestigkeit und die damit verbunden zulässige Anwendungstemperatur liegt bei etwa 1.200 °C.

Bei der Wärmedämmschicht kann es sich insbesondere um Zirkondioxid, Gadoliniumzirkonat, Mullit, Lanthanzirkonat oder Yttriumoxid-stabilisiertes Zirkonoxid handeln. Die Warmfestigkeit der Wärmedämmschicht liegt insbesondere bei mindestens 800 °C, insbesondere bei mindestens 900 °C, insbesondere zwischen etwa 1.000 °C und 1.400 °C.

Die Hartstoffschicht besteht aus einem Hartstoff. Dabei kann es sich insbesondere um TiN, TiCN, TiAIN, TiAlCN, AlTiN, AlTiCrN, AlCrN, ZrCrN, CrN-Cr, CrN, Cr₂N, BCN, TiBN, TiB₂ oder DLC handeln. Es kann sich auch um eine Nanokompositeschicht handeln. Die Härte der Hartstoffschicht liegt insbesondere in einem Bereich von zwischen etwa 2.000 HV 1 und 5.000 HV 1, insbesondere zwischen etwa 3.000 HV 1 und 4.500 HV 1. Die Warmfestigkeit der Hartstoffschicht liegt insbesondere bei mindestens 800 °C, insbesondere bei mindestens 900 °C, insbesondere zwischen etwa 1.000 °C und 1.200 °C.

Damit das Trennwerkzeug insgesamt - und nicht nur der Zahntragekörper - die erforderliche Festigkeit und Kriechbeständigkeit bei den hohen herrschenden Temperaturen aufweist, werden geeignete Maßnahmen hinsichtlich des Materials der Zähne, der Zahnspitzen und der Schneiden getroffen. Diese Maßnahmen unterscheiden sich in Anhängigkeit davon, wie das Trennwerkzeug aufgebaut ist, z. B. als Sägeblatt mit Vorsprüngen aus der Superlegierung und daran befestigten Hartmetalleinsätzen oder als Trennwerkzeug mit Zahnspitzen aus der Superlegierung, die zur Bildung einer Mehrzahl geometrisch unbestimmter Schneiden mit Schneidpartikeln belegt sind. Details hierzu sind weiter unterhalb beschrieben. Bevorzugt ist es, dass die Warmfestigkeit des gesamten Trennwerkzeugs bei zwischen etwa 1.000 °C und 1.300 °C liegt.

Die Zähne des Trennwerkzeugs können jeweils eine Zahnspitze aufweisen, die eine geometrisch bestimmte Schneide aufweist. Das mit diesem Trennwerkzeug durchgeführte Verfahren zählt also zum Spanen mit geometrisch bestimmter Schneide. Dieses Zerspanen wird auch als Sägen bezeichnet. Bei dem Trennwerkzeug handelt es sich daher um ein Sägeblatt. Das Sägeblatt kann als Sägeband, Kreissägeblatt oder Sägeblatt einer anderen Geometrie ausgebildet sein. Wenn es sich um ein Sägeband handelt, kann dieses als Superlegierungssägeband bezeichnet werden.

Die Schneide des Zahns kann eine Spanfläche mit einem negativen Spanwinkel aufweisen. Es hat sich herausgestellt, dass ein solcher negativer Spanwinkel im Vergleich zu einem positiven Spanwinkel zu wesentlich besseren Schnittergebnissen führt. Dies liegt daran, dass mit einer Spanfläche mit einem negativen Spanwinkel das Material besser aus dem Schnittkanal herausgetrieben wird. Bei den hier herrschenden hohen Temperaturen handelt es sich weniger um ein Zerspanen, sondern eher um ein Heraustreiben bzw. Verdrängen des Stahls aus dem Schnittkanal.

Die Zahnspitze kann mit einer (bzw. der) Hartstoffschicht beschichtet sein. Die Hartstoffschicht führt zu einer Reduzierung der Temperaturempfindlichkeit der Zahnspitze, sodass nicht nur der Zahntragekörper durch Verwendung der Superlegierung, sondern auch die Zahnspitze für diese Anwendung bei den herrschenden hohen Temperaturen geeignet ist. Durch die Hartstoffschicht wird des Weiteren die Härte und Verschleißfestigkeit der Zähne verbessert. Zudem bildet die Hartstoffschicht einen wirkungsvollen Korrosionsschutz.

Die Hartstoffschicht kann sich nicht nur über die Zahnspitze, sondern auch einen weiteren Teil des Zahns erstrecken. Die Hartstoffschicht kann sich auch über den gesamten Zahn oder sogar ganz oder teilweise den Zahntragekörper erstrecken. In diesen Fällen erhält der gesamte Zahn durch die Hartstoffschicht die gewünschte Härte. Die gewünschte Temperaturbeständigkeit ist aufgrund der Superlegierung in Kombination mit der Wärmedämmschicht und/oder der Hartstoffschicht vorhanden.

Die Zähne können jeweils durch einen Vorsprung und einen Einsatz gebildet werden, wobei der Vorsprung an dem Zahntragekörper und der Einsatz an dem Vorsprung angeordnet ist. Unter der "Anordnung" des Vorsprungs an dem Zahntragekörper ist auch eine einstückige Ausbildung zu verstehen. Der Vorsprung besteht also auch aus der Superlegierung. Der Einsatz bildet dann die Zahnspitze und die Schneide des Zahns.

Der Einsatz kann aus Hartmetall bestehen. In diesem Fall spricht man von einem hartmetallbestückten Sägeblatt. Bei dem Hartmetall handelt es sich insbesondere um einen Stahl, der mit Wolfram und/oder Kobalt legiert ist. Derartige Hartmetalle weisen eine Temperaturbeständigkeit von bis etwa 900 °C auf.

Anstelle von Hartmetall können die Einsätze aber auch aus einem Hochleistungsschnellarbeitsstahl (HSS) bestehen. Hochleistungsschnellarbeitsstahl weist eine Temperaturbeständigkeit von bis etwa 600 °C auf. Zur Erhöhung der Temperaturbeständigkeit der Einsätze sind diese mit einer Hartstoffschicht und/oder einer Wärmedämmschicht beschichtet.

Der Einsatz kann durch Schweißen oder Hochtemperaturlöten an dem Vorsprung befestigt sein. Diese Verbindungsverfahren stellen die erforderliche feste Verbindung zwischen Vorsprung und Einsatz auch bei den hohen herrschenden Temperaturen sicher.

Anstelle der oberhalb beschriebenen geometrisch bestimmten Schneide können die Zähne auch jeweils eine Zahnspitze aufweisen, die zur Bildung einer Mehrzahl geometrisch unbestimmter Schneiden mit Schneidpartikeln belegt ist. Bei den Schneidpartikeln handelt es sich um solche, die die erforderliche Härte und Warmfestigkeit besitzen. Dies können insbesondere kubisches Bornitrid (CBN), Schneidkeramik, Hartmetall oder Kombinationen daraus sein.

Bei dem Trennwerkzeug kann es sich auch um ein so genanntes Bimetall-Sägeblatt, insbesondere ein Bimetall-Sägeband, handeln. Ein solches Bimetall-Sägeband weist einen Trägerbandabschnitt und einen daran befestigten Kantendrahtabschnitt auf. Der Kantendrahtabschnitt bildet die Zahnspitzen und die Schneiden der Zähne. In diesem Fall handelt es sich also bei dem Trägerbandabschnitt um den Zahntragekörper. Somit besteht der Trägerbandabschnitt aus der Superlegierung und kann mit der Wärmedämmschicht und/oder der Hartstoffschicht beschichtet sein.

Neben dem Aspekt der hohen Warmfestigkeit und Kriechbeständigkeit beim Trennen heißen Stahls erfüllt der Zahntrageköper aus der Superlegierung noch einen anderen Zweck bei einer anderen Anwendung. Es handelt sich hierbei um das Trennen eines Werkstücks unter Wasser oder bei der Verwendung von Wasser als Kühlschmierstoff. Die Erfindung betrifft also auch die Verwendung eines Trennwerkzeugs mit einem Zahntragekörper aus einer Superlegierung und einer Mehrzahl von an dem Zahntragekörper angeordneten Zähnen als Werkstück-Unterwassertrennwerkzeug zum Trennen eines Werkstücks unter Wasser oder als Werkzeug zum Trennen eines Werkstücks mit reinem Wasser als Kühlschmierstoff.

Durch die hohe Korrosionsbeständigkeit der Superlegierung eignet sich das neue Zerspanungswerkzeug besonders gut für einen Einsatz unter Wasser. Ein solcher Einsatz findet z. B. zum Trennen von kontaminierten oder hochkontaminierten Bauteilen - z. B. Wärmetauschern, Rohren, Dampferzeugern oder Reaktordruckgefäßen - beim Rückbau von Kernkraftwerken statt. Ein weiteres Anwendungsbeispiel ist die Unterwasserreparatur der Stahlkonstruktionen von Windkraftanlagen oder im Bereich der Ölindustrie oder Gasindustrie. Wenn dann das Zerspanungswerkzeug über Nacht oder gar über das Wochenende oder die Betriebsferien länger nicht in Eingriff mit einem Werkstück kommt und dem Wasser ausgesetzt ist, besteht eine erhöhte Korrosionsgefahr. Dieser Gefahr wird durch die Superlegierung entgegengewirkt.

Ein weiteres Anwendungsbeispiel ist die Zerspanung von Werkstücken, bei denen nur reines Wasser als Kühlschmiermedium verwendet werden kann, da z. B. Öl - welches dem Kühlschmiermedium normalerweise zugesetzt wird - das Werkstück kontaminieren bzw. in die Oberfläche des zu trennenden Werkstücks eindringen und die Oberfläche schädigen oder in ihrer Erscheinung negativ verändern würde.

Bevorzugt ist es, dass das gesamte Trennwerkzeug diese Korrosionsbeständigkeit besitzt.

Wenn es sich bei dem Zerspanungswerkzeug um ein Bimetall-Sägeband handelt und dieses für die Unterwasseranwendung bestimmt ist, muss der Kantendraht nicht aus einem hochtemperaturbeständigen Werkstoff bestehen oder eine hochtemperaturbeständige Beschichtung aufweisen. Es kann sich beispielsweise um einen Werkzeugstahl oder einen Schnellarbeitsstahl handeln, der die gewünschte Korrosionsbeständigkeit besitzt. In diesem Fall wird also die Korrosionsbeständigkeit der Superlegierung und nicht deren Hochwarmfestigkeit ausgenutzt.

Die Superlegierung weist insbesondere einen vergleichsweise hohen Chromanteil auf. Der Chromanteil kann insbesondere mindestens etwa 12 % betragen. Hierdurch ergibt sich eine besonders gute Korrosionsbeständigkeit.

Die Zähne des Trennwerkzeugs bzw. Zerspanungswerkzeugs können unter identischen Abständen zueinander - d. h. mit einer konstanten Teilung - an dem Zahntragekörper angeordnet sein. Es ist aber auch möglich, dass die Zähne unter unterschiedlichen Abständen zueinander - d. h. mit einer variablen Teilung - an dem Zahntragekörper angeordnet sind.

Bei den Zähnen kann es sich um ungeschränkte Zähne handeln. Es ist aber auch möglich, dass es sich um geschränkte Zähne handelt.

Die Zähne können gemäß der so genannten Gruppentechnik ausgebildet und angeordnet sein. Dies bedeutet, dass sich wiederholende Gruppen von unterschiedlichen Zähnen an dem Zahntragekörper angeordnet sind. Die Zähne in der Gruppe weisen unterschiedliche Höhen und/oder Breiten auf, sodass die Zähne unterschiedliche Funktionen erfüllen. Es ist aber auch möglich, dass die Zähne im Sinne der so genannten Vorschneider- und Nachschneidertechnik ausgebildet sind.

Das neue bandförmige Trennwerkzeug ("Sägeband") wird in einer Trennmaschine ("Sägemaschine") zum Trennen eines Werkstücks aus Stahl eingesetzt. Um das Trennen eines Rohwerkstücks aus Stahl während der Stahlherstellung, bei der das Werkstück eine Temperatur von mindestens 750 °C besitzt, zu ermöglichen, weist die Sägemaschine eine Kühleinrichtung zum Kühlen eines Bereichs der Sägemaschine außerhalb des Sägebereichs, in dem das Werkstück getrennt wird, auf. Die Kühlung erfolgt mit einem geeigneten Kühlmedium. Bei dem Kühlmedium kann es sich beispielsweise um Wasser, Öl oder Luft handeln. Das Sägeband ist mit einer geeigneten Bandspannung in der Sägemaschine eingespannt, um die Längenänderung aufgrund der Wärmeausdehnung zu kompensieren.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Spanfläche die Rede ist, ist dies so zu verstehen, dass genau eine Spanfläche, zwei Spanflächen oder mehr Spanflächen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht eines Teils einer ersten beispielhaften Ausführungsform eines neuen bandförmigen Trennwerkzeugs.
- **Fig. 2**: zeigt eine Ansicht von oben auf das Trennwerkzeug gemäß Fig. 1.
- **Fig. 3**: zeigt eine Seitenansicht eines Teils einer zweiten beispielhaften Ausführungsform des neuen bandförmigen Trennwerkzeugs.
- **Fig. 4**: zeigt eine Detailansicht eines Teils des Trennwerkzeugs gemäß Fig. 3.
- **Fig. 5**: zeigt eine Seitenansicht eines Teils einer dritten beispielhaften Ausführungsform des neuen bandförmigen Trennwerkzeugs.
- **Fig. 6**: zeigt eine Seitenansicht eines Teils einer vierten beispielhaften Ausführungsform des neuen kreisförmigen Trennwerkzeugs.
- **Fig. 7**: zeigt das Detail A aus Fig. 6.

### FIGUREN BESCHREIBUNG

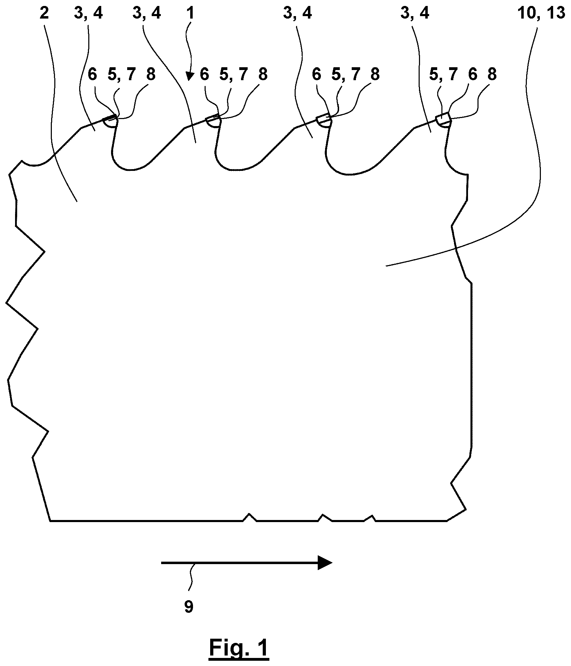

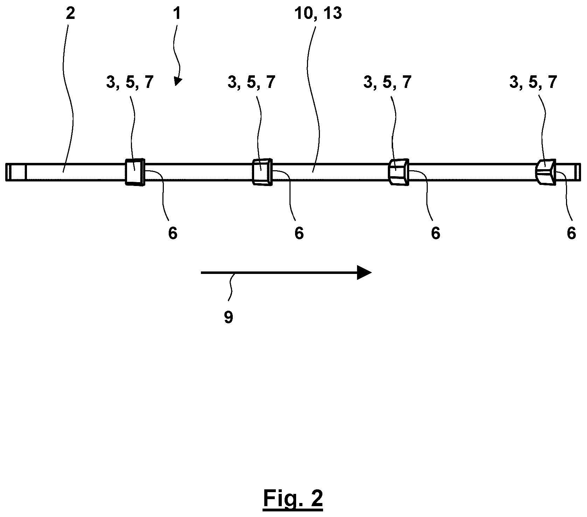

**Fig. 1** **und** **2** zeigen Ansichten eines Ausschnitts einer ersten beispielhaften Ausführungsform eines neuen Trennwerkzeugs 1, das hier bandförmig ausgebildet ist. Der Ausschnitt ist durch entsprechende Abbruchlinien im linken und rechten Bereich der Darstellung der Fig. 1 kenntlich gemacht. Ein solches bandförmiges Trennwerkzeug 1 wird im Stand der Technik auch oftmals als Sägeband bezeichnet.

Die Darstellungen dieser Figuren und auch der folgenden Figuren sind maßstabsgerecht, so dass die geometrischen Beziehungen zwischen den einzelnen Elementen des Trennwerkzeugs 1 aus den Figuren entnehmbar sind.

Das Trennwerkzeug 1 weist einen Zahntragekörper 2 und eine Mehrzahl von an dem Zahntragekörper 2 angeordneten Zähnen 3 auf. Die Zähne 3 können ganz oder teilweise einstückig mit dem Zahntragekörper 2 ausgebildet sein. Im vorliegenden Fall sind die Zähne 3 in sich wiederholenden Gruppen geometrisch unterschiedlich ausgebildeter Zähne 3 entlang des Zahntragekörpers 2 angeordnet. Die Zähne 3 sind hier mit einer variablen Teilung an dem Zahntragekörper 2 angeordnet. Die Zähne 3 könnten aber auch nicht gemäß der Gruppentechnik und/oder mit einer konstanten Teilung an dem Zahntragekörper 2 angeordnet sein.

Die Zähne 3 weisen jeweils eine Zahnspitze 7 auf, die an dem dem Zahntragekörper 2 gegenüberliegenden Ende des jeweiligen Zahns 3 angeordnet ist. Die Zähne 3 werden jeweils durch einen Vorsprung 4 des Zahntragekörpers 2 sowie einen Einsatz 5 gebildet. Der Einsatz 5 besteht aus einem Material, das härter als das Material der Vorsprünge 4 und des Zahntragekörpers 2 des Trennwerkzeugs 1 ist. Vorzugsweise handelt es sich bei dem Material des Einsatzes 5 um Hartmetall. Es könnte sich aber auch um ein anderes geeignetes Material handeln. Die Einsätze 5 sind mit dem jeweiligen zugeordneten Vorsprung 4 - insbesondere durch Löten oder Schweißen - fest verbunden.

An dem Einsatz 5 ist die Schneide 6 des Zahns 3 gebildet. Im vorliegenden Fall handelt es sich um eine geometrisch bestimmte Schneide 6. Die Schneide 6 weist eine Spanfläche 8 mit einem negativen Spanwinkel auf. Der Bandlaufrichtungssinn 9 des Trennwerkzeugs 1 verläuft hier von links nach rechts. Der Spanwinkel könnte aber auch positiv sein oder 0° betragen.

Das neue Trennwerkzeug 1 weist eine besondere Materialzusammensetzung auf, die bewirkt, dass mit dem Trennwerkzeug 1 Werkstücke aus Stahl, die eine hohe Temperatur besitzen, sicher, effizient und umweltfreundlich getrennt werden können. Eine andere Anwendungsmöglichkeit ist die Verwendung des Trennwerkzeug 1 zum Trennen eines Werkstücks unter Wasser oder als Werkzeug zum Trennen eines Werkstücks mit reinem Wasser als Kühlschmierstoff.

Hierfür besteht der Zahntragekörper 2 aus einer Superlegierung 10. Auch die Vorsprünge 4 bestehen aus der Superlegierung 10. Zusätzlich kann der Zahntragekörper 2 mit einer Wärmedämmschicht 11 und/oder einer Hartstoffschicht 12 beschichtet sein. Die Schichten 11, 12 sind bei der Ausführungsform des Trennwerkzeugs 1 gemäß Fig. 1 und 2 nicht vorhanden, so dass die Bezugszeichen 11 und 12 in den Fig. 1 und 2 nicht aufgeführt sind. Es wird daher auf die nachfolgenden Zeichnungen verwiesen, in denen die Schichten 11, 12 teilweise vorhanden sind.

Im vorliegenden Beispiel handelt es sich bei der Superlegierung 10 um eine Nickelbasis-Superlegierung 13. Es könnte sich aber auch um eine andere Superlegierung 10 handeln.

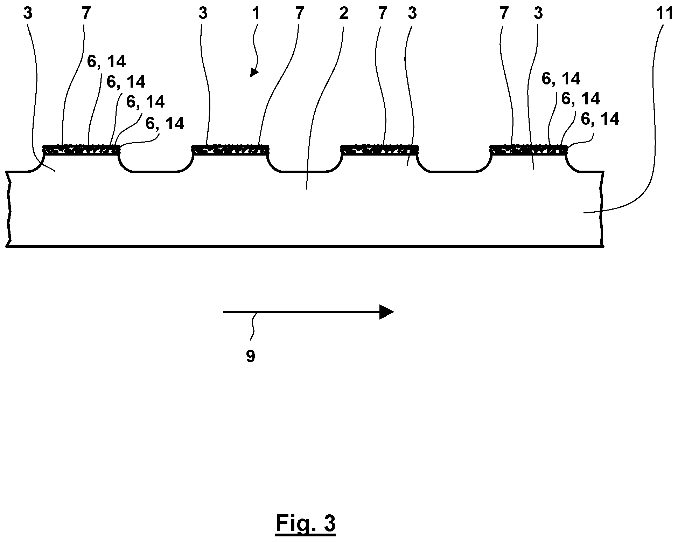

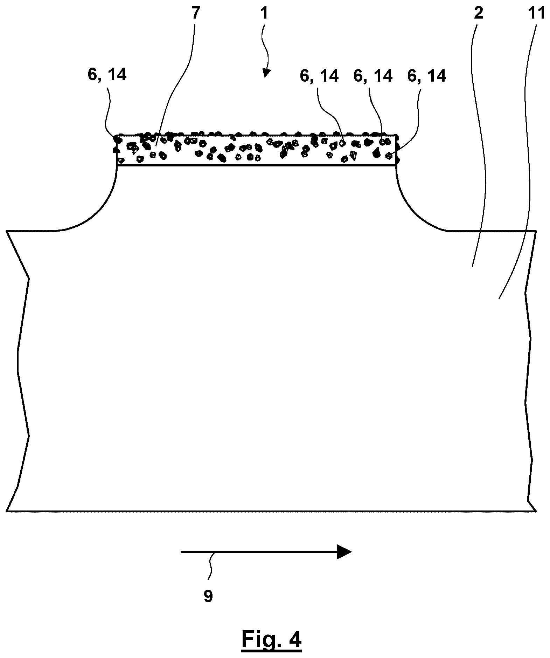

**Fig. 3** **und** **4** zeigen eine weitere beispielhafte Ausführungsform des neuen Trennwerkzeugs 1, die nicht unter den Wortlaut der unabhängigen Patentansprüche fällt. Es handelt sich wiederum um ein Trennwerkzeug 1 mit einem langgestreckten bandförmigen Zahntragekörper 2.

Im Unterschied zu der Ausführungsform des Trennwerkzeugs 1 gemäß Fig. 1, 2 weisen die Zähne 3 aber jeweils eine Zahnspitze 7 auf, die zur Bildung einer Mehrzahl geometrisch unbestimmter Schneiden 6 mit Schneidpartikeln 14 belegt sind. Die Zähne 3 sind mit einer konstanten Teilung entlang des Zahntragekörpers 2 angeordnet. Bei dieser Ausführungsform des Trennwerkzeugs 1 besteht der Zahntragekörper 2 aus keiner Superlegierung 10, ist aber mit einer Wärmedämmschicht 11 beschichtet. Es wäre aber ebenfalls möglich, dass der Zahntragekörper 2 zusätzlich aus einer Superlegierung 10 besteht und/oder mit einer Hartstoffschicht 12 beschichtet ist.

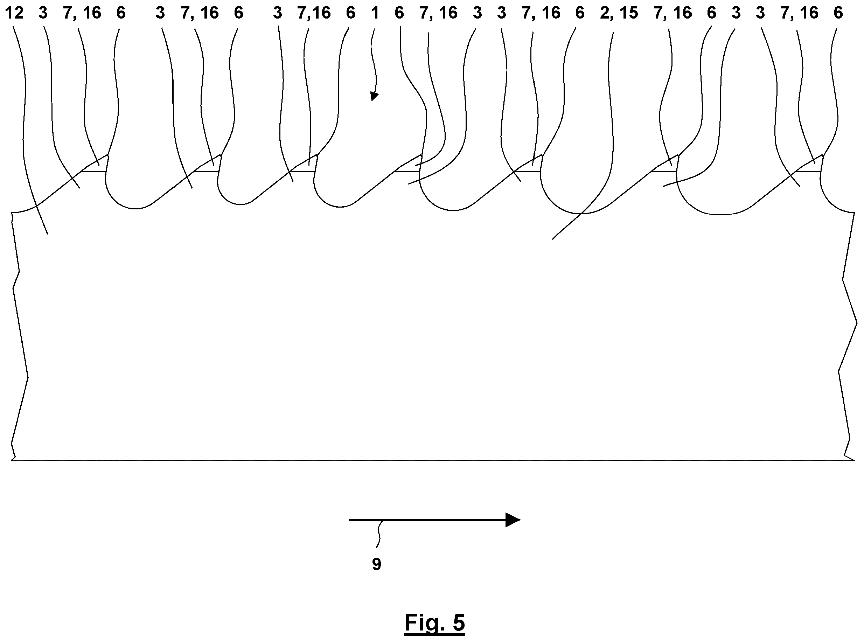

**Fig. 5** zeigt eine weitere beispielhafte Ausführungsform des neuen Trennwerkzeugs 1, die nicht unter den Wortlaut der unabhängigen Patentansprüche fällt. In diesem Fall handelt es sich bei dem Trennwerkzeug 1 um ein Bimetallsägeband mit einem Trägerbandabschnitt 15 und einem daran befestigten Kantendrahtabschnitt 16.

Der Kantendrahtabschnitt 16 bildet die Zahnspitzen 7 und die Schneiden 6 der Zähne 3. Der Rest des ursprünglich zusammenhängend bandförmigen Kantendrahtabschnitts 16 wurde durch Fräsen entfernt. Der Trägerbandabschnitt 15 ist mit der Hartstoffschicht 12 beschichtet. Der Trägerbandabschnitt 15 besteht in diesem Fall aus keiner Superlegierung 10. Er könnte aber auch aus einer Superlegierung 10 bestehen und/oder mit einer Wärmedämmschicht 11 beschichtet sein.

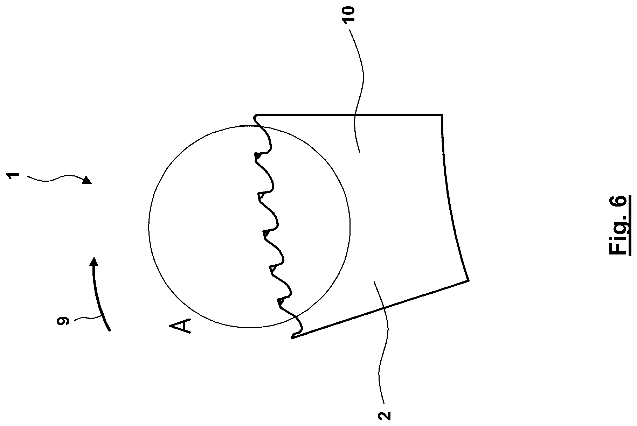

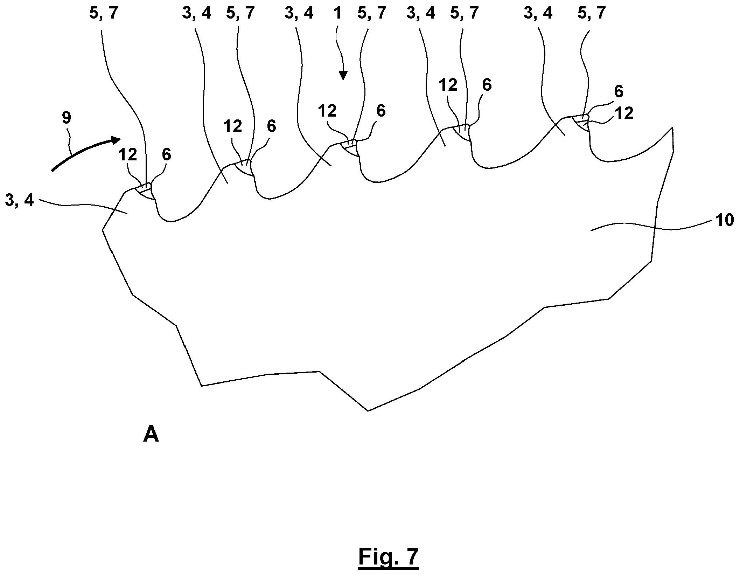

**Fig. 6** **und** **7** zeigen Ansichten einer weiteren beispielhaften Ausführungsform des Trennwerkzeugs 1. In diesem Fall ist das Trennwerkzeug 1 als Kreissägeblatt ausgebildet.

Die Zähne 3 sind gemäß der Gruppentechnologie und mit einer variablen Zahnteilung an dem Zahntragekörper 2 angeordnet. An dem Zahntragekörper 2 sind die Vorsprünge 4 gebildet, an denen die Einsätze 5 befestigt sind. Die Spanflächen 8 besitzen einen negativen Spanwinkel. Der Zahntragekörper 2 besteht aus der Superlegierung 10. Die Zahnspitzen 7 und ein weiterer Teil der Vorsprünge 4 sind mit der Hartstoffschicht 12 beschichtet.

Es ist zu beachten, dass die oberhalb beschriebenen verschiedenen Materialausbildungen der einzelnen Ausführungsformen betreffend die Superlegierung 10, die Wärmedämmschicht 11 und die Hartstoffschicht 12 auch auf die Geometrien der anderen Ausführungsformen anwendbar sind.

### BEZUGSZEICHENLISTE

- 1: Trennwerkzeug
- 2: Zahntragekörper
- 3: Zahn
- 4: Vorsprung
- 5: Einsatz
- 6: Schneide
- 7: Zahnspitze
- 8: Spanfläche
- 9: Bandlaufrichtungssinn
- 10: Superlegierung
- 11: Wärmedämmschicht
- 12: Hartstoffschicht
- 13: Nickelbasis-Superlegierung
- 14: Schneidpartikel
- 15: Trägerbandabschnitt
- 16: Kantendrahtabschnitt

## Patentansprüche

1. Trennwerkzeug (1) mit einem Zahntragekörper (2) und einer Mehrzahl von an dem Zahntragekörper (2) angeordneten Zähnen (3), **dadurch gekennzeichnet, dass** der Zahntragekörper (2) aus einer Superlegierung (10) besteht.

2. Trennwerkzeug (1) nach Anspruch 1, **dadurch gekennzeichnet, dass** die Superlegierung (10) eine Nickelbasis-Superlegierung (13) ist.

3. Trennwerkzeug (1) nach mindestens einem der vorhergehenden Ansprüche, **dadurch gekennzeichnet, dass** die Zähne (3) jeweils eine Zahnspitze (7) aufweisen, die eine geometrisch bestimmte Schneide (6) aufweist.

4. Trennwerkzeug (1) nach Anspruch 3, **dadurch gekennzeichnet, dass** die Schneide (6) eine Spanfläche (8) mit einem negativen Spanwinkel aufweist.

5. Trennwerkzeug (1) nach mindestens einem der vorhergehenden Ansprüche, **dadurch gekennzeichnet, dass** das Trennwerkzeug (1) ein Sägeband ist.

6. Trennwerkzeug (1) nach mindestens einem der vorhergehenden Ansprüche, **dadurch gekennzeichnet, dass** die Zähne (3) jeweils durch einen Vorsprung (4) und einen Einsatz (5) gebildet werden, wobei der Vorsprung (4) an dem Zahntragekörper (2) und der Einsatz (5) an dem Vorsprung (4) angeordnet ist, wobei der Einsatz (5) die Zahnspitze (7) und die Schneide (6) des Zahns (3) bildet.

7. Trennwerkzeug (1) nach Anspruch 6, **dadurch gekennzeichnet, dass** der Vorsprung (4) aus der Superlegierung (10) besteht.

8. Trennwerkzeug (1) nach Anspruch 6 oder 7, **dadurch gekennzeichnet, dass** der Einsatz (5) aus Hartmetall besteht und insbesondere durch Schweißen oder Hochtemperaturlöten an dem Vorsprung (4) befestigt ist.

9. Trennwerkzeug (1) nach mindestens einem der vorhergehenden Ansprüche mit Ausnahme der Ansprüche 3, 4, 6, 7 und 8, **dadurch gekennzeichnet, dass** die Zähne (3) jeweils eine Zahnspitze (7) aufweisen, die zur Bildung einer Mehrzahl geometrisch unbestimmter Schneiden (6) mit Schneidpartikeln (14) belegt ist.

10. Trennwerkzeug (1) nach Anspruch 9, **dadurch gekennzeichnet, dass** die Schneidpartikel (14) kubisches Bornitrid (CBN), Schneidkeramik, Hartmetall oder Kombinationen daraus aufweisen.

11. Trennwerkzeug (1) nach mindestens einem der vorhergehenden Ansprüche mit Ausnahme der Ansprüche 3, 4, 6, 7 und 8, **gekennzeichnet durch** einen Trägerbandabschnitt (15) und einen daran befestigten Kantendrahtabschnitt (16), wobei der Kantendrahtabschnitt (16) die Zahnspitzen (7) und die Schneiden (6) der Zähne (3) bildet und der Trägerbandabschnitt (15) aus der Superlegierung (10) besteht.

12. Zahntragekörper (2) für ein Trennwerkzeug (1) nach einem der vorhergehenden Ansprüche, **dadurch gekennzeichnet, dass** der Zahntragekörper (2) aus einer Superlegierung (10) besteht.

13. Verwendung eines Trennwerkzeugs (1) nach einem der Ansprüche 1 bis 11 als Hochtemperaturstahltrennwerkzeug zum Trennen eines Rohwerkstücks aus Stahl mit einer Temperatur von mindestens 750 °C, insbesondere während der Stahlherstellung.

14. Verwendung eines Trennwerkzeugs (1) nach einem der Ansprüche 1 bis 11 als
Werkstück-Unterwassertrennwerkzeug zum Trennen eines Werkstücks unter Wasser oder
Werkzeug zum Trennen eines Werkstücks mit reinem Wasser als Kühlschmierstoff.

## Claims

1. Separating tool (1) comprising a tooth supporting body (2) and a plurality of teeth (3) being arranged at the tooth supporting body (2), **characterised in that** the tooth supporting body (2) is made of a superalloy (10).

2. Separating tool (1) of claim 1, **characterised in that** the superalloy (10) is a nickel-base-superalloy (13).

3. Separating tool (1) of at least one of the preceding claims, **characterised in that** the teeth (3) each comprise a tooth tip (7) having a geometrically defined cutting edge (6).

4. Separating tool (1) of claim 3, **characterised in that** the cutting edge (6) comprises a rake surface (8) having a negative rake angle.

5. Separating tool (1) of at least one of the preceding claims, **characterised in that** the separating tool (1) is a saw band.

6. Separating tool (1) of at least one of the preceding claims, **characterised in that** the teeth (3) are each formed by a protrusion (4) and an insert (5), the protrusion (4) being arranged at the tooth supporting body (2) and the insert (5) being arranged at the protrusion (4), the insert (5) forming the tooth tip (7) and the cutting edge (6) of the tooth (3).

7. Separating tool (1) of claim 6, **characterised in that** the protrusion (4) is made of the superalloy (10).

8. Separating tool (1) of claim 6 or 7, **characterised in that** the insert (5) is made of a carbide or hard metal and in particular fixed on the protrusion (4) by welding or high-temperature brazing or soldering.

9. Separating tool (1) of at least one of the preceding claims except claims 3, 4, 6, 7 and 8, **characterised in that** the teeth (3) each comprise a tooth tip (7) being covered by cutting particles (14) to form a plurality of geometrically undefined cutting edges (6).

10. Separating tool (1) of claim 9, **characterised in that** the cutting particles (14) include cubic boron nitride (CBN), cutting ceramics, carbide or combinations thereof.

11. Separating tool (1) of at least one of the preceding claims except claims 3, 4, 6, 7 and 8, **characterised by** a carrier band section (15) and an edge wire section (16) being fixed to the carrier band section (15), wherein the edge wire section (16) forms the tooth tips (7) and the cutting edges (6) of the teeth (3) and the carrier band section (15) is made of the superalloy (10).

12. Tooth supporting body (2) for a separating tool (1) of one of the preceding claims, **characterised in that** the tooth supporting body (2) consists of a super alloy (10).

13. Use of a separating tool (1) of one of claims 1 to 11 as a high-temperature steel-separating tool for separating a blank for a workpiece made of steel with a temperature of at least 750 °C, in particular during the production of steel.

14. Use of a separating tool (1) of one of claims 1 to 11 as
an underwater workpiece separating tool for separating a workpiece underwater; or
a tool for separating a workpiece with pure water as cooling lubricant.

## Revendications

1. Outil de coupe (1) comprenant un corps porteur de dents (2) et une pluralité de dents (3) disposées sur le corps porteur de dents (2), **caractérisé en ce que** le corps porteur de dents (2) est constitué d'un superalliage (10).

2. Outil de coupe (1) selon la revendication 1, **caractérisé en ce que** le superalliage (10) est un superalliage à base de nickel (13).

3. Outil de coupe (1) selon au moins l'une des revendications précédentes, **caractérisé en ce que** les dents (3) présentent chacune une pointe de dent (7) qui présente un tranchant (6) de forme géométrique définie.

4. Outil de coupe (1) selon la revendication 3, **caractérisé en ce que** le tranchant (6) présente une face de coupe (8) avec un angle de coupe négatif.

5. Outil de coupe (1) selon au moins l'une des revendications précédentes, **caractérisé en ce que** l'outil de coupe (1) est une lame de scie.

6. Outil de coupe (1) selon au moins l'une des revendications précédentes, **caractérisé en ce que** les dents (3) sont formées chacune par une saillie (4) et un insert (5), la saillie (4) étant agencée sur le corps porteur de dents (2) et l'insert (5) sur la saillie (4), l'insert (5) formant la pointe de dent (7) et le tranchant (6) de la dent (3).

7. Outil de coupe (1) selon la revendication 6, **caractérisé en ce que** la saillie (4) est constituée d'un superalliage (10).

8. Outil de coupe (1) selon la revendication 6 ou 7, **caractérisé en ce que** l'insert (5) est constitué de métal dur et est fixé à la saillie (4) notamment par soudage ou brasage à haute température.

9. Outil de coupe (1) selon au moins l'une des revendications précédentes, à l'exception des revendications 3, 4, 6, 7 et 8, **caractérisé en ce que** les dents (3) présentent chacune une pointe de dent (7) qui est recouverte de particules de coupe (14) pour former une pluralité de tranchants (6) de géométrie indéterminée.

10. Outil de coupe (1) selon la revendication 9, **caractérisé en ce que** les particules de coupe (14) sont constituées de nitrure de bore cubique (CBN), de céramique de coupe, de carbure métallique ou d'une combinaison de ces matériaux.

11. Outil de coupe (1) selon au moins l'une des revendications précédentes, à l'exception des revendications 3, 4, 6, 7 et 8, **caractérisé par** une partie de bande support (15) et une partie de fil de bordure (16) fixée à celle-ci, la partie de fil de bordure (16) formant les pointes de dents (7) et les tranchants (6) des dents (3) et la partie de bande support (15) étant constituée du superalliage (10).

12. Corps porteur de dents (2) pour un outil de coupe (1) selon l'une des revendications précédentes, **caractérisé en ce que** le corps porteur de dents (2) est constitué d'un superalliage (10).

13. Utilisation d'un outil de coupe (1) selon l'une des revendications 1 à 11 comme outil de coupe d'acier haute température pour couper une pièce brute en acier à une température d'au moins 750 °C, en particulier pendant la fabrication de l'acier.

14. Utilisation d'un outil de coupe (1) selon l'une des revendications 1 à 11 comme
outil de coupe sous-marine d'une pièce à usiner pour couper une pièce à usiner sous l'eau
ou
outil pour couper une pièce à usiner avec de l'eau pure comme lubrifiant réfrigérant.
